Europäisches Patentamt

European Patent Office

Office européen des brevets

(11) Veröffentlichungsnummer: **0 276 758**
**A2**

## (12) EUROPÄISCHE PATENTANMELDUNG

(21) Anmeldenummer: **88100864.3**

(22) Anmeldetag: **21.01.88**

(51) Int. Cl.4: **B29C 45/52**

(30) Priorität: **26.01.87 DE 3702191**

(43) Veröffentlichungstag der Anmeldung:
**03.08.88 Patentblatt 88/31**

(84) Benannte Vertragsstaaten:
**AT BE CH ES FR GB GR IT LI LU NL SE**

(71) Anmelder: **Klöckner Ferromatik Desma GmbH**
**Riegeler Strasse 4**
**D-7831 Malterdingen(DE)**

(72) Erfinder: **Schrammel, Werner**
**Rothalde 17**
**D-7830 Emmendingen(DE)**

(74) Vertreter: **Kiefer, Winfried, Dipl.-Phys.**
**Klöckner-Werke Aktiengesellschaft**
**Patentabteilung Klöcknerstrasse 29**
**D-4100 Duisburg 1(DE)**

(54) **Rückströmsperre für die Plastifizier- und Spritzaggregate für Spritzgiessmaschinen.**

(57) Die Rückströmsperre für die Plastifizier-und Spritzaggregate für Spritzgießmaschinen, die insbesondere zum Verarbeiten von thermoplastischem Kunststoffmaterial mit Füllstoffen dienen, weist eine Schneckenspitze auf. Außer dem Schaft der Schneckenspitze ist ein axial verschiebbarer Sperring angeordnet, der während der Spritzphase gegen einen Distanzring an der Stirnseite der Plastifizier-und Einspritzschnecke ansteht und der während der Plastifizierphase mit dem Körper der Schneckenspitze Durchtrittskanäle für das in den Plastifizierraum eintretende plastifizierte Kunststoffmaterial begrenzt. Der Sperring hat in seinem Anlagebereich an dem Körper der Schneckenspitze und im komplementär ausgebildeten Anlagebereich für den Distanzring jeweils einen Einsatz aus Keramikmaterial. Zusätzlich kann der Distanzring ein Körper aus Keramikmaterial sein.

EP 0 276 758 A2

## Rückströmsperre für die Plastifizier-und Spritzaggregate für Spritzgießmaschinen

Die Erfindung betrifft eine Rückströmsperre für die Plastifizier-und Spritzaggregate für Spritzgießmaschinen, insbesondere zum Verarbeiten von thermoplastischem Kunststoffmaterial mit Füllstoffen, wobei die Rückströmsperre eine Schneckenspitze und auf dem Schaft der Schneckenspitze einen axial verschiebbaren Sperring aufweist, der während der Spritzphase gegen einen Distanzring an der Stirnseite der Plastifizier-und Einspritzschnecke ansteht und der während der Plastifizierphase mit dem Körper der Schneckenspitze Durchtrittskanäle für das in den Plastifizierraum eintretende plastifizierte Kunststoffmaterial begrenzt.

Spritzgießmaschinen dienen zum Herstellen von Spritzgußteilen aus thermoplastischen, duroplastischen bzw. vernetzten Kunststoffen, wobei diese Kunststoffe einen Zusatz von Glasfasern und dgl., allgemein Füllstoffen, aufweisen können.

Spritzgießmaschinen kommen auch zum Einsatz beim Herstellen keramischer Formlinge aus ungebrannten keramischen Massen, wie zum Beispiel ungebrannten Porzellanmasse.

Im Rahmen der Erfindung sind unter zu verarbeitendem Material sowohl Kunststoffmaterial als auch ungebrannte keramische Massen zu verstehen.

Beim Verarbeiten von Kunststoffmaterial wird prinzipiell das Kunststoffmaterial als Granulat über einen Zugabetrichter dem Plastifizier-und Spritzzylinder des Plastifizier-und Spritzaggregates der betreffenden Spritzgießmaschine zugeführt, wobei in dem Plastifizierzylinder die ro tierende Plastifizier-und Spritzschnecke axial verschiebbar angeordnet ist.

Das zu verarbeitende Material wird durch die sich drehende Schnecke plastifiziert und in den Plastifizierraum transportiert, der sich vor der Schneckenspitzeausbildet,aus dem in die geschlossene Spritzgießform das plastifizierte Material eingespritzt wird.

Sobald eine entsprechende Menge von Material plastifiziert ist, wird die Rotation der Schnecke unterbunden und diese in axialer Richtung zur geschlossenen Spritzgießform verschoben, wobei das plastifizierte Material durch die Angußbohrung in das Nest der geschlossenen Spritzgießform eingespritzt (Spritzdruckphase). Das Einspritzen erfolgt in der Spritzdruckphase unter dem Spritzdruck.An die Spritzphase schließt sich die Nachdruckphase an, in der entsprechenden thermodynamischen Gesetzmäßigkeiten die in dem Nest befindliche Masse unter dem als Nachdruck bezeichneten Druck abkühlt und wobei der hierbei auftretende Schwund durch zusätzliches plastifiziertes Material kompensiert wird.

An die Nachdruckphase schließt sich die Staudruckphase an, während der , wie eingangs beschrieben, die Schnecke granuliertes Kunststoffmaterial plastifiziert und in der zur Spritzgießform entgegengesetzten Richtung von der Angußbohrung wegbewegt. Spritzdruckphase , Nachdruckphase und Staudruckphase bilden jeweils einen Spritzzyklus, in dessen Verlauf ein Spritzling bzw. mittels einer Mehrfachform mehrere Spritzlinge gleichzeitig hergestellt werden.

Beim Verarbeiten von ungebrannten keramischen Massen entfällt die Staudruckphase.

Beim Verarbeiten dieser genannten Materialien, insbesondere dann, wenn das thermoplastische Kunststoffmaterial Füllstoffe, wie z.B. Glasfasern aufweist, tritt an den Plastifizier-und Spritzaggregaten ein erheblicher Verschleiß auf. Dies gilt insbesondere für den Bereich der Rückströmsperre.

Aus diesem Grunde hat man bisher, um den Verschleiß der Plastifizier-und Spritzaggregate in vertretbaren Grenzen zu halten, sowohl den Spritzzylinder als auch die Schnecke und ggf. den Sperring bisher aus Metallegierungen bzw. Stahllegierungen und andere Sonderstähle gewählt. Diese Verbesserungen haben bisher im Bereich der Rückströmsperre lediglich den zu erwartenden Verschleiß etwas herabsetzen können, jedoch darüber hinaus keine beachtlichen Erfolge gebracht, die sich z.B. für die Plastifizierzylinder bzw. Plastifizier-und Einspritzschnecken im Bereich der Schneckengänge ergeben haben.

Es ist auch bekannt, anstelle derartiger Legierungen Oxidkeramikmaterial zu verwenden, das vergleichsweise den Abrieb herabsetzt, wie extrem teure Sonderstähle bzw. Sonderlegierungen (Prospekt der Fa. Feldmühle, SPK oxide CERAMICS).

Diese Sonderstähle bzw. Sonderlegierungen brachten jedoch keine entsprechende Verbesserung bei ihrer Verwendung für die Rückströmsperren für die Plastifizier-und Einspritzaggregate für Spritzgießmaschinen.

Es zeigte sich nunmehr überraschenderweise , daß durch den gezielten Einsatz von Keramikoxidmaterial für die Rückströmsperre Standzeiten für die Rückströmsperre erreicht wurden, die bisher nicht für möglich erachtet wurden, insbesondere dann, wenn man in Betracht zieht, daß im Bereich der Rückströmsperre die eingesetzten Sonderstähle bzw. Sonderlegierungen in keiner Weise einen befriedigenden Erfolg zeigten.

Der Erfindung liegt somit die Aufgabe zugrunde, eine Rückströmsperre der eingangs erwähnten Art zu schaffen, bei der der Abrieb extrem niedrig, d.h. die Standzeiten weit über das übliche Maß hinaus größer sind.

Diese Aufgabe wird erfindungsgemäß dadurch gelöst, daß der Sperring in seinem Anlagebereich an dem Körper der Schneckenspitze und im komplementär ausgebildeten Anlagebereich für den Distanzring jeweils einen Einsatz aus Keramikmaterial hat. Durch diese Maßnahmen tritt der oben erwähnte überraschende Effekt eines extrem niedrigen Verschleißes, d.h. der unerwartet langen Standzeiten, ein.

In einer weiteren Ausgestaltung der Erfindung ist der Distanzring ein Körper aus Keramikmaterial.

In einer noch weiteren Ausgestaltung der Erfindung weist der Plastifzierzylinder im Bereich der Rückströmsperre eine Büchse aus Keramikmaterial auf, so daß generell auch der bisher extrem hohe Abrieb in diesem Bereich der Rückströmsperre an der Wandung des Spritzzylinders erheblich und in einem unerwarteten Maße reduziert ist.

Es stellte sich heraus, daß dieser überraschende Effekt insbesondere dann auftritt, wenn das Keramikmaterial Zirkonoxid ist.

Die Zusammensetzungen, seine Handelsbezeichnungen, sind aus dem oben erwähnten Prospekt entnehmbar.

Die Erfindung ist in der Zeichnung anhand eines Ausführungsbeispieles erläutert.

Es zeigen:

Fig. 1 im Schnitt ein Plastifizier-und Spritzaggregat im Ausschnitt im Bereich der Rückströmsperre;

Fig 2 in der Darstellung der Fig. 1 den Sperring in vergrößerter Darstellung;

Fig. 3 die Einzelheit X aus Fig. 2 in vergrößerter Darstellung.

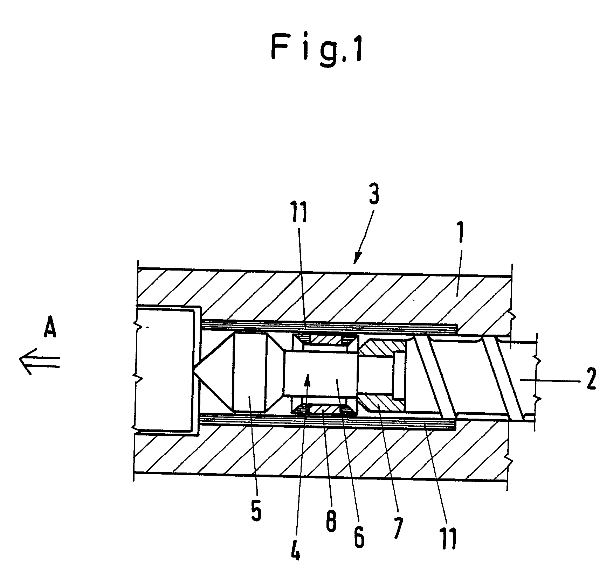

Fig. 1 zeigt im Schnitt einen Ausschnit eines Plastifizier-und Spritzaggregats im Ausschnitt im Bereich der Rückströmsperre. Mit 1 ist der Plastifizier-und Einspritzzylinder bezeichnet, mit 2 die ebenfalls im Ausschnitt dargestellte Plastifizier-und Einspritzschnecke, die in Richtung zur nicht dargestellten Spritzgießform (vgl. Richtung des Pfeiles A)die Rückströmsperre 3 aufweist. Die Rückströmsperre besteht aus der Schneckenspitze 4, dem Körper 5 der Schneckenspitze und dem Schaft 6 der Schneckenspitze, die in die Stirnfläche der Schnecke 2 eingeschraubt ist (nicht dargestellt) Im Bereich der Stirnfläche ist der Distanzring auf dem Schaft 6 angeordnet und steht in einem ringförmigen Bereich gegen die Stirnfläche der Schnecke 2 an.

Auf dem Schaft 6 der Rückströmsperre ist unter Ausbildung eines Ringspaltes der Sperring 8 angeordnet.

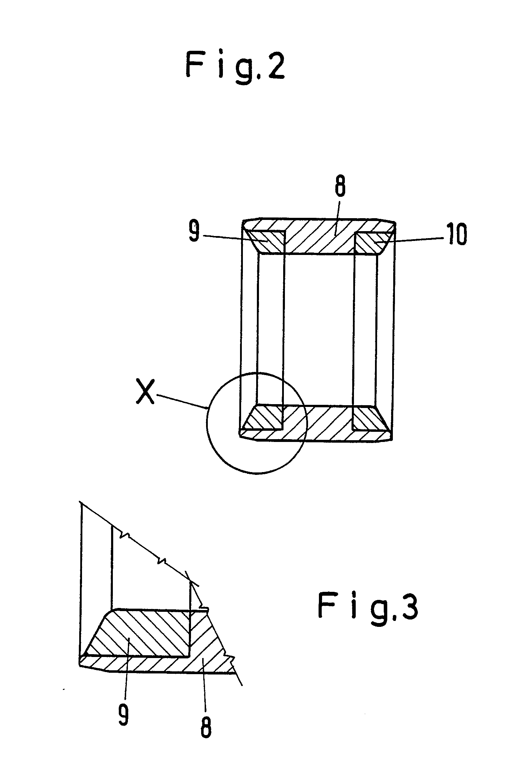

Der Sperring 8 weist gemäß Fig. 2 in seinem Anlagebereich an dem Körper 5 der Schneckenspitze einen Einsatz 9 auf, der während der Staudruckphase mit dem Körper der Schneckenspitze die Durchtrittskanäle für das in dem Plastifizierraum eintretende plastifizierte Material begrenzt. Der Sperring weist weiterhin einen Einsatz 10 aus Keramikmaterial auf, der während der Spritzphase gegen den Distanzring 7 ansteht und während der Spritzphase ein Zurückströmen in den Bereich der Gewindegänge der Plastifizier-und Einspritzschnecke verhindert (Schließstellung)

Fig. 3 zeigt die Einzelheit X aus Fig. 2 in vergrößerter Darstellung.

Der Plastifizier-und Spritzzylinder weist im Bereich der Rückströmsperre eine Büchse 11 aus Keramikmaterial auf.

Es zeigte sich, daß durch die Verwendung der in dem obengenannten Prospekt genannten Zirkonoxid-Keramikmaterialien sich optimale Ergebnisse erzielen, wobei je nach dem zu verarbeitenden Material der einen oder anderen Zusammensetzung der Vorzug zu geben ist.

## Ansprüche

1. Rückströmsperre für die Plastifizier-und Spritzaggregate für Spritzgießmaschinen, insbesondere zum Verarbeiten von thermoplastischem Kunststoffmaterial mit Füllstoffen, wobei die Rückströmsperre eine Schneckenspitze, auf dem Schaft der Schneckenspitze einen axial verschiebbaren Sperring aufweist, der während der Spritzphase gegen einen Distanzring an der Stirnseite der Plastifizier-und Einspritzschnecke ansteht und der während der Plastifizierphase mit dem Körper der Schneckenspitze Durchtrittskanäle für das in den Plastifizierraum eintretende plastifizierte Kunststoffmaterial begrenzt, dadurch gekennzeichnet, daß der Sperring (8) in seinem Anlagebereich an dem Körper (5) der Schneckenspitze (4) und im komplementär ausgebildeten Anlagebereich für den Distanzring (7) jeweils einen Einsatz (9 bzw. 10) aus Keramikmaterial hat.

2. Rückströmsperre nach Anspruch 1, dadurch gekennzeichnet, daß der Distanzring (7) ein Körper aus Keramikmaterial ist.

3. Rückströmsperre nach Anspruch 1 - 2, dadurch gekennzeichnet, daß der Plastifizier-und Spritzzylinder im Bereich der Rückströmsperre (3) eine Büchse (11) aus Keramikmaterial aufweist.

4. Rückströmsperre nach einem der Ansprüche 1 - 3, dadurch gekennzeichnet, daß das Keramikmaterial Zirkonoxid ist.

# Fig.1

# Fig.2

8

9          10

X

# Fig.3

9    8